# FASCICULE DE BREVET EUROPEEN

(11) **EP 3 067 578 B1**
(45) Date de publication et mention de la délivrance du brevet: **06.11.2019**
(21) Numéro de dépôt: 16165851.3
(22) Date de dépôt: 20.01.2012
(51) Int. Cl.: F16C 19/16, F16C 19/18, F16C 19/38, F16C 19/49, F16C 19/54, F16C 33/36, F03D 80/70

(54) **PALIER A TROIS RANGEES ET PLUS DE CORPS ROULANTS**
LAGER MIT DREI REIHEN UND MEHR VON WÄLZKÖRPERN
BEARING WITH THREE AND MORE ROWS OF ROLLING ELEMENTS

(30) Priorité: 25.03.2011 FR 1152517
(43) Date de publication de la demande: 14.09.2016
(62) Demande divisionnaire de: 12152005.0
(73) Titulaire: Defontaine, 85530 La Bruffière (FR)
(72) Inventeur: ERRARD, Germain, 44210 PORNIC (FR); JACQUEMONT, Eric, 44190 CLISSON (FR); DELACOU, Jean-Michel, 16190 Saint-Plantaire (FR)
(74) Mandataire: Novagraaf Technologies

(56) Documents cités:
- DE-A1- 10 010 295
- DE-A1-102007 015 421
- DE-A1-102008 049 812
- US-A- 3 762 782

## Description

L'invention concerne un palier pivotant, ou couronne d'orientation, sur des installations où les efforts subis sont importants.

Un tel palier, selon le préambule de la revendication 1, est connu du document DE 10 2008 049812.

Le domaine éolien est particulièrement concerné.

Un but en soi est d'ailleurs de proposer un tel palier pour une pale d'un moyeu de rotor d'éolienne.

De façon générale, il existe déjà des paliers susceptibles de subir de gros efforts, le palier concerné étant interposé et fixé entre une première structure et une seconde structure entre lesquelles des efforts passent alors, via le palier, l'une au moins de ces structures pouvant tourner par rapport à l'autre, autour de l'axe de rotation du palier.

Le palier comprend:
- une première et une seconde bagues de roulement, une partie de la seconde bague de roulement s'étendant autour de la première radialement audit axe de rotation,
- et plusieurs séries d'éléments (ou corps) roulants, chacune interposée entre les première et une seconde bagues de roulement, annulairement autour dudit axe.

Sur certaines installations, les efforts subis peuvent être très élevés tant axialement (axe de rotation) que radialement à cet axe. Les moments sont également parfois très importants.

Dans le domaine éolien, les pales d'éolienne subissent non seulement des efforts importants dans l'axe de la/chaque pale (efforts dits axiaux), mais également de très importants efforts exercés radialement à l'axe de la pale et du moyeu de rotor (efforts dits alors radiaux).

Dans ce cas, les première et seconde structures précitées pourront en particulier être respectivement un moyeu de rotor d'éolienne et une pale de l'éolienne, la pale pouvant alors tourner par rapport au moyeu autour dudit axe de rotation du palier.

Les vitesses de rotation, les dimensions toujours croissantes des éoliennes, les efforts imposés par le vent, mais également des efforts liés à l'angle de calage des pales imposent une résistance toujours accrue des paliers.

A cet égard, il est courant que les pales puissent pivoter d'une dizaine de degrés autour de leur axe d'allongement pour favoriser le rendement en fonction de la puissance du vent.

C'est dans ce contexte général qu'un objet de l'invention est d'améliorer la tenue mécanique des paliers. Un corolaire est de prévenir certains problèmes liés à l'utilisation de couronnes d'orientation pour les pales d'éoliennes en particulier l'usure due aux vibrations (en anglais « False Brinelling », FEB, faux effet Brinell).

La solution est décrite dans la partie caractérisante de la revendication 1.

Ainsi, on assurera une tenue élevée aux efforts perpendiculairement à l'axe de rotation du palier.

Grâce à une/de telle (s) rangée(s) intermédiaire(s) on va assurer une tenue performante à ces efforts radiaux, même si plus faible qu'avec des rouleaux par exemple, tout en permettant une tenue aux pivotements dus aux vibrations, ceci supprimant l'usure par FEB notamment dans le domaine éolien.

Une solution à rangée(s) intermédiaire(s) d'éléments roulants comprenant des billes (en anglais bail bearings ou spherical ball bearings) a été particulièrement performante, en particulier en termes de rigidité et de limitation des déplacements radiaux des bagues, limitant ainsi le FEB.

Egalement favorablement, les éléments roulants de la ou des rangées intermédiaires appartenant aux trois rangées, ou plus, d'éléments roulants échelonnées le long de l'axe de rotation du palier sont préchargés dans un plan perpendiculaire à cet axe de rotation.

Pour en particulier la tenue aux moments de renversement de plus en plus importants, on envisage que les éléments roulants des rangées extrêmes desdites au moins trois rangées d'éléments roulants puissent être des roulements tonneaux (en anglais barrel bearings) ou des rouleaux (roller bearings en anglais) et plus généralement des éléments roulants à contacts linéiques, ayant dans les deux cas individuellement un axe de rotation transversal à l'axe de rotation du palier.

Ici « transversal » indique de façon générale que l'axe de rotation considéré croise l'axe de rotation du palier, non nécessairement de façon perpendiculaire.

Notamment une solution à rouleaux se présentant comme des cylindres de section constante et/ou à axe individuel de rotation perpendiculaire à l'axe de rotation du palier, permettra d'assurer une tenue performante parallèlement à l'axe de rotation du palier, donc l'encaissement des efforts ainsi dirigés, ainsi que les moments de renversement (en particulier sur les éoliennes), avec un accroissement attendu de la capacité de charge.

Par ailleurs, en disposant les éléments roulants de la/des rangées intermédiaires sur un même diamètre (médian) différent de ceux des deux rangées extrêmes, qui, eux, seront alors favorablement aussi sur un diamètre (médian) commun, on favorisera particulièrement la tenue aux vibrations et la tenue mécanique de l'ensemble, en dynamique.

Ceci et ce qui précède étant spécifiquement pertinent dans le domaine éolien, il est légitime que soit ici également concernée une éolienne comprenant un moyeu de rotor, au moins une pale et un palier, ou couronne d'orientation, comme présenté(e) ci-avant, la pale pouvant tourner par rapport au moyeu et les éléments roulants ainsi disposés étant adaptés à tenir ensemble les efforts et moments spécifiques à ce domaine, et tout particulièrement les vibrations, limitant, voire supprimant, ainsi l'usure par FEB.

Les caractéristiques qui précèdent, voire celles qui suivent en liaison avec la description plus détaillée ci-après et les revendications dépendantes, favorisent la fiabilité des installations concernées à palier, ou couronne d'orientation, pivotant(e), ainsi que l'ergonomie de montage/démontage, en offrant une solution performante, techniquement et financièrement.

Dans les exemples illustrés aux dessins annexés :
- la figure 1 est un schéma de face d'une éolienne conforme à la solution ici présentée,
- la figure 2 est une vue de côté,
- les figures 3 et 4 montrent chacune une réalisation possible à l'endroit de la section III-III de la figure 2, qui ne fait pas partie de l'objet des revendications,
- la figure 5 est une vue de face de la couronne d'orientation concernée, ici celle de la figure 4 (on doit imaginer les autres réalisations de la même manière),
- la figure 6 montre des rouleaux extrêmes et des billes intermédiaires; cette réalisation ne fait pas partie de l'objet des revendications,
- la figure 7 montre des billes en rangées extrêmes et intermédiaire (seul le palier, sans les structures fixées à lui est montré),
- la figure 8 montre des billes en rangées extrêmes et sur deux rangées intermédiaires,
- et les figures 9, 10, 11 montrent des roulements tonneaux rouleaux en rangées extrêmes et des billes sur une ou deux rangées intermédiaires.

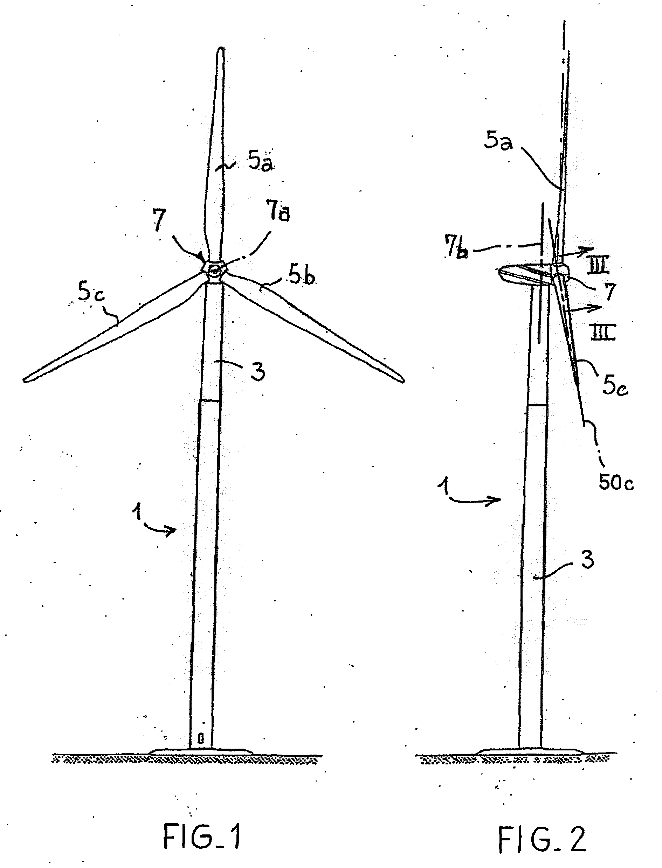

Figures 1 et 2, on voit une éolienne 1 comprenant un mât 3 en tête duquel au moins une pale, ici trois, 5a, 5b, 5c, tournent autour de l'axe horizontal 7a d'un moyeu central 7.

Typiquement, le moyeu 7 est monté lui-même tournant autour d'un axe vertical 7b par rapport au mât 3, pour s'orienter au mieux vis-à-vis du vent.

Chaque pale, et en particulier la pale 5c de la figure 2 peut pivoter de quelques degrés ou dizaines de degrés autour de son axe d'allongement 50c, par rapport au moyeu de rotor 7, de manière à réguler la puissance et la vitesse de rotation de la turbine.

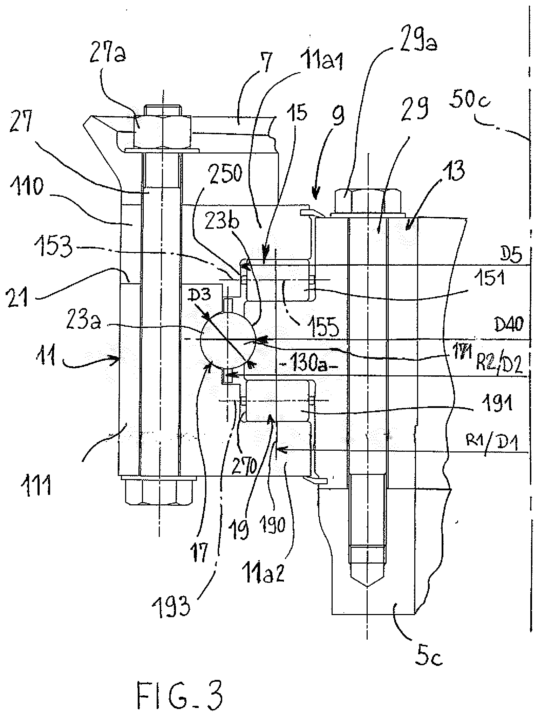

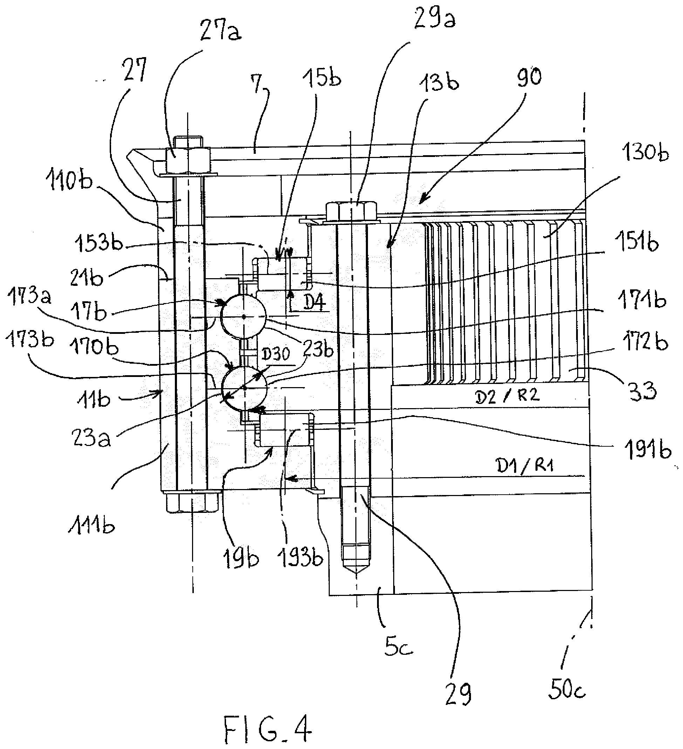

Figures 3, 4, on retrouve en 7 le moyeu de rotor et en 50c l'axe de la pale 5c (50c repérant également l'axe de rotation des paliers, respectivement 9, 90, illustrés).

L'orientation angulaire privilégiée de chaque pale, telle que la pale 5c, génère en particulier des efforts radiaux importants, ainsi que des moments de flexion élevés.

Les paliers, ou couronnes d'orientation, 9, 90 illustré(e)s comprennent respectivement une première bague de roulement 11, 11b, une seconde bague de roulement 13, 13b et plusieurs séries d'éléments roulants 15, 15b, 17, 17b, 170b, 19, 19b (cf. figures 3, 4).

Les parties extrêmes 11a1, 11a2 de la première bague de roulement qui s'étendent autour des parties en regard de la seconde bague, radialement à l'axe de rotation 50c, servent, avec le nez central 130a de cette dernière, à maintenir les éléments roulants des rangées extrêmes telles 15, 19 ; 15b, 19b....

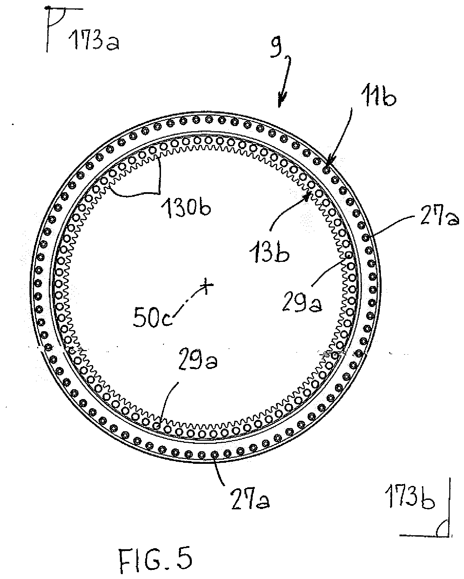

De façon traditionnelle, chaque série d'éléments roulants est arrangée en cercle, comme le montre la figure 5, ceci entre les première et une seconde bagues de roulement, annulairement autour de l'axe 50c.

Dans les exemples illustrés figures 3, 4, ces séries d'éléments roulants comprennent respectivement trois et quatre séries annulaires qui sont arrangées suivant respectivement trois et quatre rangées échelonnées le long dudit axe 50c.

Ces rangées d'éléments roulants comprennent :
- deux rangées extrêmes (axialement) 151, 191 ;151b, 191b, comprenant chacune une série de rouleaux 15, 19 ;15b, 19b ayant individuellement un axe de rotation 153, 193 ;153b, 193b, transversal à (qui coupe en travers) l'axe de rotation 50c du palier,
- et respectivement une (figure 3) et deux (figure 4) rangées 171 ;171b, 172b intermédiaires (axialement) d'éléments roulants comprenant des billes : 17, 17b, 170b.

Il y a ainsi étagement axial sur trois ou quatre niveaux ou rangées. Autrement dit : les séries d'éléments roulants comprennent plus de deux séries annulaires (donc deux rangées) de tels éléments, échelonnées le long de l'axe 50c.

Figures 3, 4, les rangées extrêmes et la/les rangées intermédiaires de ces séries d'éléments roulants présentent des diamètres médians différents entre elles. Ici, les rangées extrêmes sont sur un même diamètre médian D1 (mesuré entre l'axe 50c et le milieu des rouleaux 15,19 ;15b,19b), de même pour la/les rangées intermédiaires : diamètre médian D2 mesuré de la même manière (billes). Figures 3, 4, ce sont les rayons (R1,R2) qui sont figurés. Ainsi, ces éléments roulants, d'une part des rangées extrêmes et, d'autre part de la/des rangées intermédiaires sont situés, par rapport audit axe de rotation 50c, sur des rayons différents, respectivement R1, R2.

De façon plus générique, on trouve donc dans la solution présentée une ou deux séries annulaires d'éléments roulants 17,17b,170b adaptés à tenir au moins des efforts orientés radialement ou transversalement à l'axe de rotation 50c du palier, cette/ces séries étant interposées, en projection le long de cet axe, entre les (séries d')éléments roulants des deux rangées extrêmes adaptés chacun à tenir essentiellement des efforts orientés parallèlement ou sensiblement parallèlement à l'axe de rotation du palier.

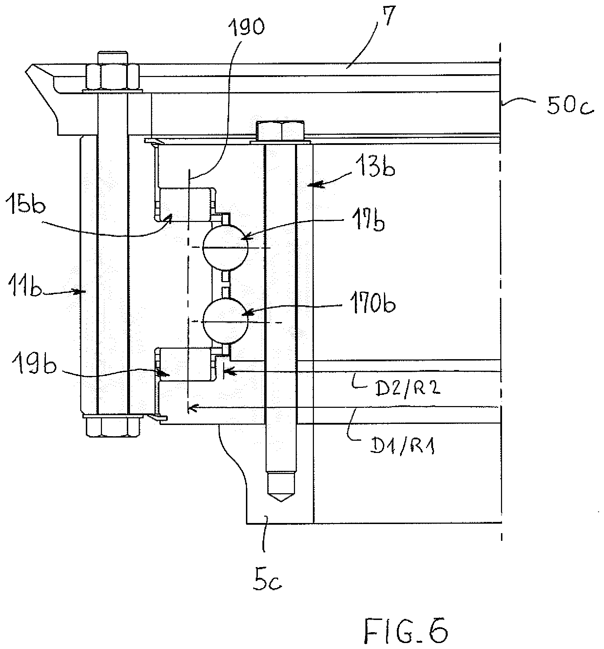

Figures 3, 4, mais aussi figure 6, les rouleaux 15,19 ;15b,19b sont des cylindres de section sensiblement constante.

Le rayon varie très légèrement sur le long du rouleau pour obtenir une répartition de pression constante, un tombé à chaque extrémité permet de réduire les effets de bord. Et l'axe individuel de rotation des rouleaux (tel 155 figure 3 pour celui montré en 15) est perpendiculaire à l'axe 50b de rotation du palier.

Figures 3, 4, les éléments roulants de la ou des rangées intermédiaires 171 ;171b,172b sont tous identiques entre eux et situés suivant un même diamètre médian centré sur l'axe 50c (diamètre médian D2).

Concernant les billes 17,17b,170b correspondantes, il est recommandé, s'il y en a plusieurs séries, qu'elles présentent toutes le même diamètre, tel D30 figure 4, les rouleaux des deux rangées extrêmes étant également de préférence tous identiques : diamètre repéré D4 figure 4, ceci en particulier pour les applications palier de pale d'éolienne. Dans d'autres applications pour lesquelles un effort axial serait prépondérant dans une direction privilégiée, le diamètre D30 des corps (ou éléments) roulants 17b,170b de la/des rangées intermédiaires pourrait être inférieur à D4.

Figure 3, les éléments roulants intermédiaires, auxquels appartient celui 171 représenté, sont situés, suivant la direction parallèle à l'axe 50c sur laquelle chacun est situé, sensiblement à mi-chemin entre ceux des deux rangées extrêmes. La rangée intermédiaire 171 étant unique figure 3, le diamètre D3 des billes y est supérieur à celui D30, commun, des billes des deux rangées intermédiaires successives de la figure 4, mais ceci peut varier : le diamètre de la bille est le résultat d'un calcul à partir des efforts radiaux de l'application.

Figure 4, les billes des rangées intermédiaires respectivement supérieure 171b et inférieure 172b sont situées, à nouveau suivant la direction parallèle à l'axe 50c sur laquelle chacune est située, plus près des rouleaux respectivement de la rangée extrême supérieure 151b et de la rangée extrême inférieure 191b que de leurs billes homologues de l'autre rangée intermédiaire.

Encore figure 4, et ce sera de préférence la même chose figure 3, on a repéré respectivement 173a et 173b les deux plans médians des éléments roulants des deux rangées intermédiaires illustrées. Comme recommandé, ces éléments roulants à contacts ponctuels sont préchargés respectivement dans l'un et l'autre de ces plans, lesquels sont chacun perpendiculaires à l'axe de rotation 50c. Pour cela, le diamètre des billes est, dans le plan précité, légèrement supérieur à la différence des rayons mesurés depuis 50c des pistes de roulement (respectivement 23a,23b) des bagues 11b et 13b qui les reçoivent. Sous effort, la charge de ces billes sera donc radiale à l'axe 50c. Cette orientation radiale de charge, et éventuellement de pré-charge, sera d'ailleurs la même pour la série de billes 17, figure 3, ou encore pour les billes de la /des rangée(s) intermédiaire(s) des figure 6 et suivantes. Figure 3, on a par ailleurs repéré 190, l'axe commun de chargement des éléments roulants des deux rangées extrêmes. Il correspond à une charge axiale. Il est donc parallèle à l'axe 50c. Cet axe se retrouve, repéré ou non, mais illustré figure 4, puis 6 et suivantes où existe donc également un axe de charge axiale des éléments roulants des deux rangées extrêmes.

Tant figure 3 que figure 4, on notera aussi que l'une des bagues est en plusieurs parties. Il s'agit ici de la première bague de roulement 11, 11b, qui est radialement extérieure par rapport à l'autre bague, essentiellement plus proche de l'axe de rotation 50c.

Ainsi, pour faciliter les montages/démontages et l'entretien, la première bague de roulement 11, 11b, est en deux parties, respectivement 110, 111 ; 110b, 111b. Le plan de joint, respectivement 21, 21b, préférable est, pour la transmission des efforts, un plan proche de la rangée extrême inférieure, ici 19 ou 19b, pour établir une liaison monobloc entre le moyen de rotor et les rangées de billes intermédiaires. Sur l'illustration, le plan de joint est sensiblement au niveau de la rangée extrême supérieure 151 ou 151b qu'il contourne pour servir localement de chemin de roulement supérieur aux rouleaux de la rangée extrême supérieure, pour ce qui concerne la partie supérieure 110 ; 110b de cette première bague. Plus bas, la partie complémentaire, inférieure, 111 ; 111b de cette même bague, sert de chemin de roulement extérieur aux billes de la (figure 3) /des (figure 4) rangée (s) intermédiaire (s), ainsi que de chemin de roulement inférieur aux rouleaux de la rangée extrême inférieure. Un montage comparable existe sur les modes de réalisation des figures suivantes.

Et on remarque que, radialement, pour la tenue aux efforts et moments, le diamètre D40 du fond (à mi-hauteur) du chemin (appelé aussi piste) de roulement intérieur 23 de chaque bille est inférieur au diamètre D5 de la butée extérieure, transversale (ici perpendiculaire) à l'axe 50c, de chaque rouleau, qu'il soit de la rangée supérieure (250) ou inférieure (270). Ainsi on peut positionner radialement la piste des billes sur un diamètre le plus proche possible du diamètre D1 de la rangée de rouleaux pour limiter la longueur du nez central 130a et par conséquence les contraintes de flexion au pied de celui-ci. Le nez 130a est la partie centrale de la bague intérieure 13 qui s'étend radialement jusqu'au chemin de roulement intérieur 23. De part et d'autre, il sert aussi de chemin de roulement central, par exemple aux rouleaux 15, 19.

En tout état de cause, tout ou partie des caractéristiques précédentes sera mise en œuvre pour que les éléments roulants ainsi disposés soient adaptés à tenir ensemble des efforts orientés avec des composantes radiales et axiales par rapport à l'axe 50c de rotation du palier.

Concernant le montage sur le moyeu 7 et la pale 5c, on notera encore que, de part et d'autre des roulements, les bagues 11, 13 sont fixées respectivement au moyeu et à la pale.

Les vis, avec ou sans tête (goujons), respectivement 27 et 29, assurent les fixations précitées, parallèlement à l'axe 50c, à deux distances radiales différentes de cet axe. La figure 5 montre cela, avec les bagues respectivement externe 11b et interne 13b (avec ses dents 130b en périphérie interne ; bien entendu prévisibles dans le cas de la figure 3).

La tige filetée de chaque moyen de fixation 27 échelonné sur la périphérie de la bague 11 coopère avec un écrou 27a. Chaque moyen de fixation 29 est vissé directement dans le corps de l'emplanture de la pale 5c, avec sa tête 29a situé côté moyeu. Ainsi, les boulons 27, 29 sont accessibles par l'intérieur creux du moyeu de rotor 7.

La différence entre les exemples des figures 4 et 6 est que les éléments roulants des rangées intermédiaires sont radialement situés, dans un cas plus loin, dans un cas moins loin, de l'axe 50c (D2/R2) que ne le sont les éléments roulants des rangées extrêmes.

Cette disposition d'un côté ou l'autre n'est d'ailleurs déterminante pour aucun des modes de réalisation couverts par la solution ici brevetable.

Les solutions à rangées (axialement) extrêmes à rouleaux doivent permettre d'obtenir une grande capacité de charge axiale mais surtout de moment de renversement, charge prépondérante notamment sur les très grandes éoliennes (multi méga Watts). La limitation (par la précharge) du mouvement radial autorisé de la bague tournante est également appréciable.

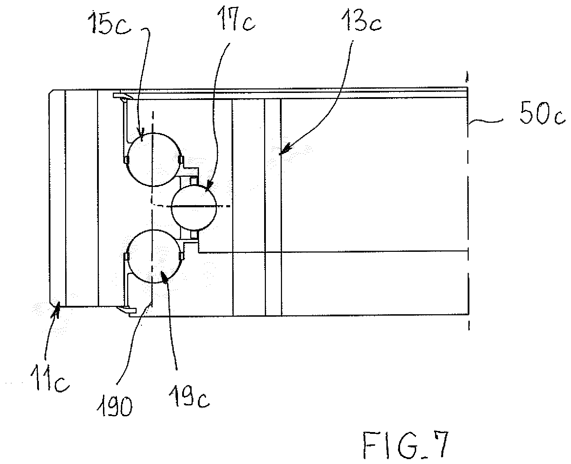

La figure 7 permet de montrer que des structures autres qu'un moyeu de rotor et une pale d'éolienne peuvent être fixés aux bagues tournantes du palier. La réalisation d'une tourelle de grue de chantier est ainsi par exemple concernée, ceci en liaison avec l'une quelconque des réalisations ici décrites.

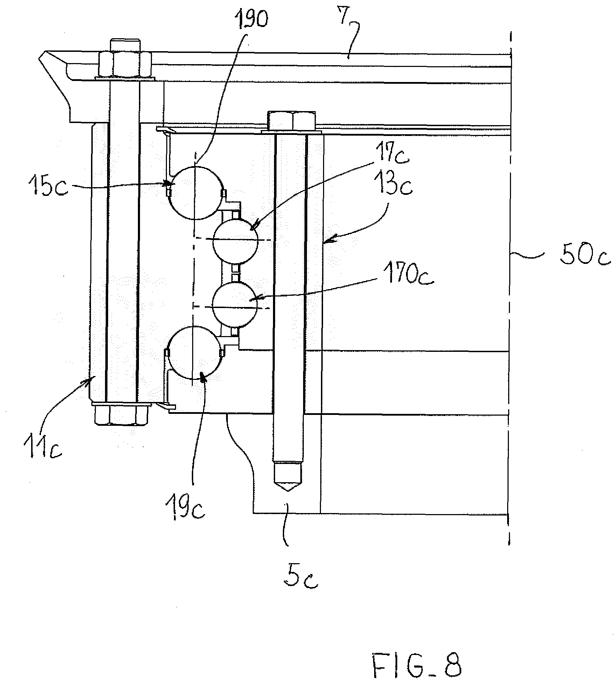

Figures 7, 8, les éléments roulants 15c, 19c des rangées (axialement) extrêmes sont des billes. Elles sont (sensiblement) sphériques. Il en est de même pour les éléments roulants, respectivement 17c et 17c, 170c, de la (des) rangée (s) (axialement) intermédiaire (s). Les axes de chargement des éléments roulants sont représentés, comme ils le sont sur les figures suivantes.

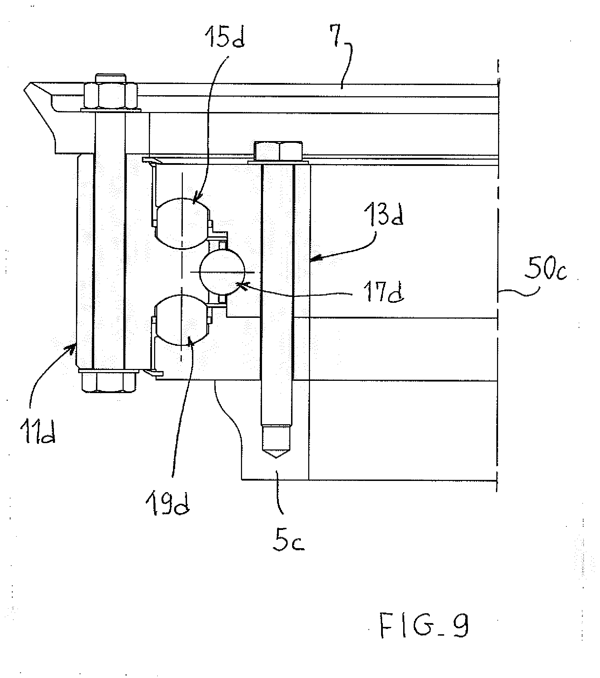

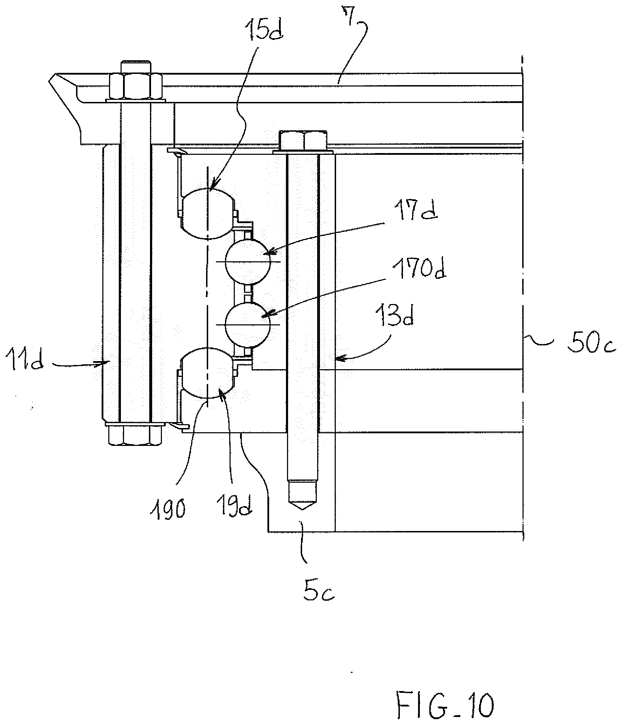

Figures 9, 10 d'ailleurs, les éléments roulants 15d, 19d des rangées (axialement) extrêmes, bien qu'à nouveau à contacts ponctuels avec les pistes des bagues de roulement adjacentes (ici repérées 11d, 13d) comme figures 7, 8, sont des roulements tonneaux. L'axe de rotation de chacun de ces roulements tonneaux est orienté perpendiculairement à l'axe 50c de rotation du palier. Les éléments roulants, respectivement 17d et 17d, 170d, de la (des) rangée(s) (axialement) intermédiaire(s) sont des billes.

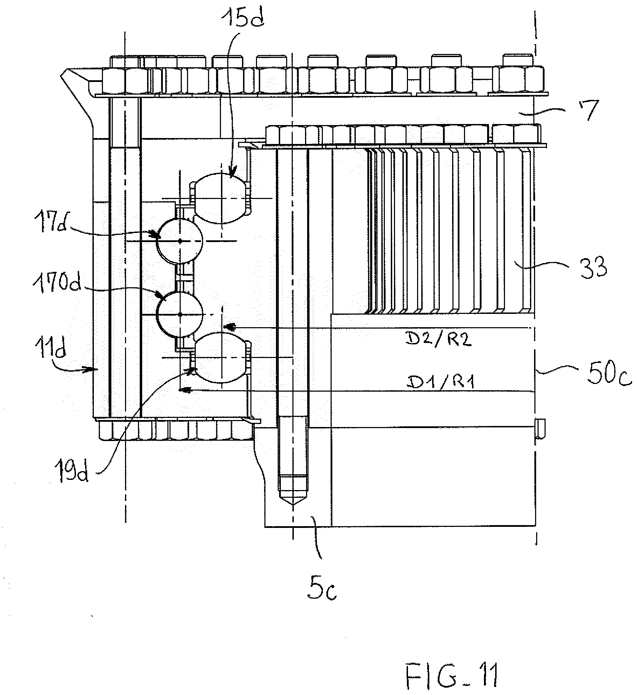

Quant à la figure 11, elle montre à nouveau que les éléments roulants de la/des rangée(s) intermédiaire(s) peuvent être radialement situés dans un cas plus loin, dans un cas moins loin (figure 10), de l'axe 50c (D2/R2) que ne le sont les éléments roulants des rangées extrêmes.

A ce sujet, on notera que les versions à bague interne en deux parties (figures 6-10) ou à bague externe en deux parties (figures 3, 4, 11) seront utiles pour le positionnement de la denture d'entraînement 33 qui se fera toujours sur la bague en une partie. Suivant les configurations, la denture est sur la bague radialement intérieure ou la bague extérieure.

Concernant les portées des éléments roulants à contacts ponctuels présentés (billes, tonneaux), la présente couronne d'orientation sera de préférence à rangée(s) d'éléments roulants à deux zones de contact (souvent connu en anglais sous l'appellation « two zone (point) contact... ») .

Quant à l'utilisation de billes en charge radiale, elle permet de réaliser un montage pré-chargé qui va introduire une rigidité et limiter les déplacements radiaux des bagues, limitant ainsi le FEB.

## Revendications

1. Palier présentant un axe de rotation (50c) et interposable entre une première structure (7) et une seconde structure (5c), les première et seconde structures pouvant tourner l'une par rapport à l'autre autour de l'axe du palier, ce palier comprenant :
- une première et une seconde bagues de roulement (130, 150...), une partie de la seconde bague de roulement s'étendant autour de la première radialement audit axe (50c),
- et plusieurs séries d'éléments roulants interposées entre la première et la seconde bagues de roulement, annulairement autour dudit axe (50c),
lesdites plusieurs séries d'éléments roulants comprenant au moins trois séries annulaires dont au moins deux sont situées, par rapport audit axe (50c), sur des rayons (R1, R2) différents et étant arrangées suivant au moins trois rangées échelonnées le long dudit axe et que les éléments roulants de la ou des rangées intermédiaires desdites au moins trois rangées d'éléments roulants échelonnées le long dudit axe (50c) de rotation du palier étant préchargés dans un plan perpendiculaire audit axe de rotation, les deux rangées extrêmes desdites au moins trois rangées d'éléments roulants échelonnées le long dudit axe (50c) de rotation du palier comprennent chacune une série d'éléments roulants à contacts ponctuels (15c,19c), **caractérisé en ce que** les éléments roulants de la ou des rangées intermédiaires desdites au moins trois rangées d'éléments roulants comprennent des éléments roulants à contacts ponctuels(17c, 170c).

2. Palier selon la revendication 1, **caractérisé en ce que** lesdites au moins trois rangées d'éléments roulants échelonnées le long dudit axe (50c) de rotation du palier comprennent :
- deux rangées extrêmes comprenant chacune une série de billes (15c, 19c),
- et au moins une rangée intermédiaire d'éléments roulants comprenant des billes (17c, 170c).

3. Palier selon la revendication 1, **caractérisé en ce que** lesdites au moins trois rangées d'éléments roulants échelonnées le long dudit axe (50c) de rotation du palier comprennent :
- deux rangées extrêmes comprenant chacune une série de roulements tonneaux ayant individuellement un axe de rotation transversal à l'axe de rotation du palier, et
- au moins une rangée intermédiaire d'éléments roulants comprenant des éléments roulants à contacts ponctuels.

4. Palier selon l'une des revendications précédentes, **caractérisé en ce qu'**il comprend deux rangées intermédiaires d'éléments roulants échelonnées le long dudit axe (50c) de rotation du palier.

5. Palier selon l'une des revendications précédentes, **caractérisé en ce que** les éléments roulants de la ou des rangées intermédiaires sont tous identiques et situés suivant un même diamètre médian (D2) centré sur ledit axe (50c) de rotation du palier.

6. Palier selon l'une des revendications précédentes, **caractérisé en ce que** l'une des bagues est en plusieurs parties (110, 111;110b, 111b).

7. Eolienne comprenant un palier selon l'une des revendications précédentes, un moyeu de rotor (7) en tant que première structure et au moins une pale (5c) en tant que seconde structure, la pale pouvant tourner par rapport au moyeu.

## Patentansprüche

1. Lager, das eine Drehachse (50c) aufweist und zwischen einer ersten Struktur (7) und einer zweiten Struktur (5c) eingefügt werden kann, wobei die erste und zweite Struktur in Bezug zueinander um die Achse des Lagers drehen können, wobei dieses Lager umfasst:
- einen ersten und einen zweiten Laufring (130, 150...), wobei sich ein Teil des zweiten Laufrings radial zur Achse (50c) um den ersten herum erstreckt,
- und mehrere Sätze Wälzelemente, die ringförmig um die Achse (50c) herum zwischen dem ersten und dem zweiten Laufring eingefügt sind,
wobei die mehreren Sätze Wälzelemente mindestens drei ringförmige Sätze umfassen, von denen mindestens zwei in Bezug auf die Achse (50c) auf unterschiedlichen Radien (R1, R2) liegen und entlang der Achse in mindestens drei abgestuften Reihen angeordnet sind, und die Wälzelemente der zwischengelegenen Reihe(n) der mindestens drei entlang der Drehachse (50c) des Lagers abgestuften Wälzelementreihen in einer Ebene senkrecht zur Drehachse vorgespannt sind, die zwei äußersten Reihen der mindestens drei entlang der Drehachse (50c) des Lagers abgestuften Wälzelementreihen jede einen Satz Wälzelemente mit Punktkontakten (15c, 19c) umfassen, **dadurch gekennzeichnet, dass** die Wälzelemente der zwischengelegenen Reihe(n) der mindestens drei Wälzelementreihen Wälzelemente mit Punktkontakten (17c, 170c) umfassen.

2. Lager nach Anspruch 1, **dadurch gekennzeichnet, dass** die mindestens drei entlang der Drehachse (50c) des Lagers abgestuften Wälzelementreihen umfassen:
- zwei äußerste Reihen, die jede einen Satz Kugeln (15c, 19c) umfassen,
- und mindestens eine zwischengelegene Wälzelementreihe, die Kugeln (17c, 170c) umfasst.

3. Lager nach Anspruch 1, **dadurch gekennzeichnet, dass** die mindestens drei entlang der Drehachse (50c) des Lagers abgestuften Wälzelementreihen umfassen:
- zwei äußerste Reihen, die jede einen Satz Lauftonnen umfassen, die jeweils eine zur Drehachse des Lagers querverlaufende Drehachse aufweisen, und
- mindestens eine zwischengelegene Wälzelementreihe, die Wälzelemente mit Punktkontakten umfasst.

4. Lager nach einem der vorstehenden Ansprüche, **dadurch gekennzeichnet, dass** es zwei zwischengelegene Wälzelementreihen umfasst, die entlang der Drehachse (50c) des Lagers abgestuft sind.

5. Lager nach einem der vorstehenden Ansprüche, **dadurch gekennzeichnet, dass** die Wälzelemente der zwischengelegenen Reihe(n) alle identisch sind und in ein und demselben mittleren Durchmesser (D2) liegen, der auf der Drehachse (50c) des Lagers zentriert ist.

6. Lager nach einem der vorstehenden Ansprüche, **dadurch gekennzeichnet, dass** einer der Ringe mehrteilig (110, 111; 110b, 111b) ist.

7. Windkraftanlage, die ein Lager nach einem der vorstehenden Ansprüche, eine Rotornabe (7) als erste Struktur, und mindestens ein Blatt (5c) als zweite Struktur umfasst, wobei das Blatt in Bezug auf die Nabe drehen kann.

## Claims

1. Bearing which has an axis of rotation (50c) and can be interposed between a first structure (7) and a second structure (5c), the first and second structures being rotatable with respect one another about the axis of the bearing, this bearing comprising:
- a first and a second bearing race (130, 150...), wherein one part of the second bearing race extends around the first, radially with respect to said axis (50c),
- and multiple series of rolling elements interposed between the first and second bearing races, in annular fashion about said axis (50c),
said multiple series of rolling elements comprising at least three annular series, of which at least two are situated, with respect to said axis (50c), on different radius (R1, R2), and being arranged in at least three rows staggered along said axis, and the rolling elements of the one or more intermediate rows of said at least three rows of rolling elements staggered along said axis (50c) of rotation of the bearing being preloaded in a plane perpendicular to said axis of rotation, the two end rows of said at least three rows of rolling elements staggered along said axis (50c) of rotation of the bearing each comprise a series of rolling elements with point contacts (15c, 19c) **characterized in that** the rolling elements of the one or more intermediate rows of said at least three rows of rolling elements comprise rolling elements with point contacts (17c, 170c).

2. Bearing according to Claim 1, **characterized in that** said at least three rows of rolling elements staggered along said axis (50c) of rotation of the bearing comprise:
- two end rows each comprising a series of balls (15c, 19c),
- and at least one intermediate row of rolling elements comprising balls (17, 17b, 170b).

3. Bearing according to Claim 1, **characterized in that** said at least three rows of rolling elements staggered along said axis (50c) of rotation of the bearing comprise:
- two end rows each comprising a series of barrel rolling elements (15d, 19d) having, individually, an axis of rotation transverse to the axis of rotation of the bearing,
- and at least one intermediate row of rolling elements comprising rolling elements with point contacts.

4. Bearing according to one of the preceding claims, **characterized in that** it comprises two intermediate rows of rolling elements staggered along said axis (50c) of rotation of the bearing.

5. Bearing according to one of the preceding claims, **characterized in that** the rolling elements of the one or more intermediate rows are all identical and positioned along one and the same median diameter (D2) centred on said axis (50c) of rotation of the bearing.

6. Bearing according to one of the preceding claims, **characterized in that** one of the races is in multiple parts (110, 111; 110b, 111b).

7. Wind turbine comprising a bearing according to one of the preceding claims, a rotor hub (7) as first structure and at least one blade (5c) as second structure, wherein the blade can turn with respect to the hub.
